# EUROPEAN PATENT APPLICATION

(11) **EP 4 249 974 A1**
(43) Date of publication of application: **27.09.2023**
(21) Application number: 21909074.3
(22) Date of filing: 29.11.2021
(51) Int. Cl.: G02B 6/44

(54) **OPTICAL CABLE**

(30) Priority: 23.12.2020 CN 202011541954
(71) Applicant: Huawei Technologies Co., Ltd., Shenzhen, Guangdong 518129 (CN)
(72) Inventor: ZHANG, Jinxing, Shenzhen, Guangdong 518129 (CN); MA, Jingwei, Shenzhen, Guangdong 518129 (CN); LI, Yuanyuan, Shenzhen, Guangdong 518129 (CN)
(74) Representative: Maiwald GmbH
(86) International application number: PCT/CN2021/134152
(87) International publication number: WO 2022/135075

(57) **Abstract**

An optical fiber cable is provided, and belongs to the field of optical fiber cable layout technologies. The optical fiber cable includes an optical fiber (1), at least one strength rod (2), and an outer sheath (3). Both the optical fiber (1) and the strength rod (2) are located in the outer sheath (3). A Young's modulus of the strength rod (2) is greater than 53 GPa, a bending radius is less than 26 D, and restored straightness of the strength rod (2) is greater than 80%. The restored straightness is a degree by which the strength rod (2) is straightened after being bent, and D is a diameter of the strength rod (2). The optical fiber cable has good tensile elasticity and good bending resilience. In optical fiber cable layout, especially in a layout manner in which overhead layout and duct layout are alternated, there is no need to switch between optical fiber cables, thereby reducing an optical fiber cable layout time, and improving optical fiber cable layout efficiency.

## Description

This application claims priority to Chinese Patent Application No. 202011541954.5, filed with the China National Intellectual Property Administration on December 23, 2020 and entitled "OPTICAL FIBER CABLE", which is incorporated herein by reference in its entirety.

### TECHNICAL FIELD

This application relates to the field of optical fiber cable layout technologies, and in particular, to an optical fiber cable.

### BACKGROUND

With rapid development of an optical distribution network (optical distribution network, ODN), optical fiber cables are used more and more extensively.

Manners of optical fiber cable layout mainly include overhead layout and duct layout. In addition, in most scenarios, overhead layout and duct layout are mixed in use. Therefore, in optical fiber cable layout, when an optical fiber cable needs to be laid out in an overhead layout manner, a person skilled in the art needs to use an optical fiber cable applicable to overhead layout; and when an optical fiber cable needs to be laid out in a duct layout manner, a person skilled in the art needs to use an optical fiber cable applicable to duct layout.

It can be learned that, during optical fiber cable layout, frequent switches between optical fiber cables are needed, causing a problem of inefficient optical fiber cable layout.

### SUMMARY

This application provides an optical fiber cable, to resolve a problem in a related technology. The technical solution is as follows:

An optical fiber cable is provided. The optical fiber cable includes an optical fiber, at least one strength rod, and an outer sheath.

Both the optical fiber and the at least one strength rod are located in the outer sheath.

A Young's modulus of the strength rod is greater than 53 GPa, a bending radius of the strength rod is less than 26 D, and restored straightness of the strength rod is greater than 80%. The restored straightness is a degree by which the strength rod is straightened after being bent, and D is a diameter of the strength rod.

The Young's modulus of the strength rod is a physical quantity that reflects tensile elasticity of the strength rod, for example, a larger Young's modulus of the strength rod indicates higher tensile elasticity performance of the strength rod.

The bending radius of the strength rod is a physical quantity that reflects bending performance of the strength rod. A smaller bending radius indicates that the strength rod is more easily bent, and a larger bending radius indicates that the strength rod is less easily bent. To help the optical fiber cable pass through a duct, especially a bending duct, the optical fiber cable needs to have a specific bending property. Therefore, the bending radius of the strength rod needs to be less than 26 D.

The restored straightness is a physical quantity that reflects resilience generated after the strength rod is bent. Higher restored straightness indicates higher resilience generated after the strength rod is bent. The restored straightness may be calculated by using a bending angle. For example, a ratio of a bending angle existing after automatic recovery from bending to 180 degrees is denoted as the restored straightness.

That restored straightness of the strength rod is greater than 80% refers to: When the strength rod is bent at a bending radius less than 26 D, the restored straightness of the strength rod is greater than 80%.

In an example, the strength rod serves as a strength member of the optical fiber cable, and the Young's modulus of the strength rod is greater than 53 GPa, so that the optical fiber cable has good tensile elasticity, the optical fiber cable has a good tensile resistance effect when applied to overhead layout, and the optical fiber cable is not prone to tensile breaking in cases of a strong wind force and snow coverage.

In an example, the bending radius of the strength rod is less than 26 D, and D is the diameter of the strength rod, so that the strength rod has the bending property. After an external force causing the strength rod to bend is removed, the strength rod can automatically recover, and the restored straightness is greater than 80%. With the strength rod that can be bent and automatically straightened after the bending serving as a strength member of the optical fiber cable, the optical fiber cable can be bent and can be automatically straightened after the bending. In this way, when applied to duct layout, the optical fiber cable has a good capability of passing through a duct, and no duct rodder is needed for passing through a duct.

It can be learned that, using the strength rod with the foregoing mechanical characteristic as a strength member of the optical fiber cable enables the optical fiber cable to have good tensile elasticity and good bending resilience. It can be learned that, the optical fiber cable can be applied to not only overhead layout but also duct layout. Therefore, in optical fiber cable layout, especially in a layout manner in which overhead layout and duct layout are alternated, there is no need to switch between optical fiber cables, thereby reducing an optical fiber cable layout time, and improving optical fiber cable layout efficiency.

In addition, the optical fiber cable has good tensile elasticity and can resist a specific wind force and snow coverage. The optical fiber cable has the bending property and can be suitable for passing through a bending duct. The optical fiber cable can automatically resile after being bent. This helps quickly pass through a duct.

In a possible implementation, the strength rod includes a central rod and at least one cladding tube, and the at least one cladding tube is sequentially wrapped on an outer surface of the central rod from inside out.

A Young's modulus of the central rod is greater than 100 GPa, each cladding tube can be bent, and restored straightness generated after the bending is greater than 80%.

With the Young's modulus of the central rod being greater than 100 GPa, the central rod is enabled to have good tensile elasticity.

Each cladding tube has specific flexibility, and can be bent. In addition, as the restored straightness generated after the bending is greater than 80%, the cladding tube is enabled to have a bending capability, and can be automatically straightened after the bending.

With the strength rod having such a characteristic applied to the optical fiber cable, the optical fiber cable is enabled to have good tensile elasticity and good bending resilience. It can be learned that, the optical fiber cable can be applied to not only overhead layout but also duct layout. Therefore, in optical fiber cable layout, especially in a layout manner in which overhead layout and duct layout are alternated, there is no need to switch between optical fiber cables, thereby reducing an optical fiber cable layout time, and improving optical fiber cable layout efficiency.

In a possible implementation, there are a plurality of cladding tubes, and Young's moduli of the plurality of cladding tubes sequentially decreases from inside out, so that tensile elasticity also sequentially decreases from inside out. In this way, a cladding tube with higher tensile elasticity is located inside, and a cladding tube with slightly lower tensile elasticity is located outside. This helps improve the tensile elasticity and the bending resilience of the strength rod.

In a possible implementation, the central rod is a rod-like structure formed by a plurality of steel wires, and each cladding tube is a tubular structure formed by a first-type non-metallic fiber material.

The steel wire may be one of a common steel wire, a phosphatized steel wire, a galvanized steel wire, and a stainless steel wire. The first-type non-metallic fiber material may be one or more of glass yarn, basalt yarn, and liquid crystal yarn.

For example, if there is one cladding tube, the cladding tube may be a tubular structure formed by glass yarn, a tubular structure formed by basalt yarn, or a tubular structure formed by liquid crystal yarn. For another example, if there are two cladding tubes, the cladding tubes may include a tubular structure formed by glass yarn and a tubular structure formed by basalt yarn, where one is an inner tube, and the other is an outer tube. For another example, if there are two cladding tubes, the cladding tubes may include a tubular structure formed by glass yarn and a tubular structure formed by liquid crystal yarn. For another example, if there are two cladding tubes, the cladding tubes may include a tubular structure formed by basalt yarn and a tubular structure formed by liquid crystal yarn. For another example, if there are three cladding tubes, the cladding tubes may include a tubular structure formed by glass yarn, a tubular structure formed by basalt yarn, and a tubular structure formed by liquid crystal yarn.

In a possible implementation, a ratio of a cross-sectional area of the central rod to a cross-sectional area of the at least one cladding tube ranges from 10% to 30%.

In processing of the strength rod, a person skilled in the art may adjust the ratio of the cross-sectional area of the central rod to the cross-sectional area of the at least one cladding tube based on a range of breaking strength that needs to be met by the strength rod. The breaking strength of the strength rod ranges from 800 MPa to 1250 MPa. Correspondingly, in a solution in which the cladding tube is a tubular structure formed by glass yarn, a ratio of a cross-sectional area of the steel wire to a cross-sectional area of the glass yarn ranges from 10% to 30%. Alternatively, for another example, the central rod 21 is a rod-like structure formed by a steel wire, the cladding tube 22 includes tubular structures formed by two or more materials, and a ratio of a cross-sectional area of the central rod 21 to a total cross-sectional area of the cladding tube 22 ranges from 10% to 30%.

In a possible implementation, the central rod is a rod-like structure formed by a second-type non-metallic fiber material, and each cladding tube is a tubular structure formed by a first-type non-metallic fiber material.

As described above, the first-type non-metallic fiber material may be one or more of glass yarn, basalt yarn, and liquid crystal yarn. The second-type non-metallic fiber material may be carbon fiber or aramid yarn.

In a possible implementation, a ratio of a cross-sectional area of the central rod to a cross-sectional area of the at least one cladding tube ranges from 30% to 60%.

In processing of the strength rod, a person skilled in the art may adjust the ratio of the cross-sectional area of the central rod to the cross-sectional area of the at least one cladding tube based on a range of breaking strength that needs to be met by the strength rod. The breaking strength of the strength rod ranges from 800 MPa to 1250 MPa. Correspondingly, in a solution in which the cladding tube is a tubular structure formed by glass yarn, a ratio of a cross-sectional area of the carbon fiber to a cross-sectional area of the glass yarn ranges from 30% to 60%. Alternatively, in a solution in which the cladding tube includes a tubular structure formed by glass yarn and a tubular structure formed by basalt yarn, S1:S2+S3 ranges from 30% to 60%, S1 is a cross-sectional area of the carbon fiber, S2 is a cross-sectional area of the tubular structure formed by glass yarn, and S3 is a cross-sectional area of the tubular structure formed by basalt yarn.

In a possible implementation, the first-type non-metallic fiber material includes glass yarn, and the second-type non-metallic fiber material includes carbon fiber or aramid yarn.

The first-type non-metallic fiber material may be a non- metallic fiber material that can be bent and can be automatically straightened after the bending, for example, may be glass yarn.

The second-type non-metallic fiber material may be a non-metallic fiber material with a high Young's modulus, and has good tensile elasticity, for example, may be carbon fiber or aramid yarn.

In a possible implementation, the strength rod further includes an adhesive member, and the adhesive member is provided between the central rod and the cladding tube and on an outer surface of the cladding tube.

The adhesive member may be glue, or may be an adhesive material such as resin.

For example, if there is one cladding tube, the adhesive member is provided between the central rod and the cladding tube and on an outer surface of the cladding tube. The adhesive member can enable better fastening performance between the central rod and the cladding tube, so that the central rod and the cladding tube do not easily detach under an external force, thereby improving stability of the strength rod in the optical fiber cable.

For another example, if there are a plurality of cladding tubes, the adhesive member is provided between the central rod and a cladding tube at an innermost layer, between two adjacent cladding tubes, and on an outer surface of a cladding tube at an outermost layer. The adhesive member can enable better fastening performance between the central rod and the cladding tube, so that the central rod and the cladding tube do not easily detach under an external force, thereby improving stability of the strength rod in the optical fiber cable.

In a possible implementation, breaking strength of the strength rod ranges from 800 MPa to 1250 MPa.

The breaking strength of the strength rod 2 ranges from 800 MPa to 1250 MPa, so that the optical fiber cable has high strength and can resist most stress load. With the breaking strength of the strength rod 2 lower than 1250 MPa, the strength rod 2 can be quickly broken under particularly large stress when used in an overhead optical fiber cable, to avoid a case that a utility pole is pulled because the optical fiber cable is not broken and consequently a safety accident is caused by collapse of the utility pole.

It can be learned that, the strength rod 2 with the breaking strength ranging from 800 MPa to 1250 MPa not only can meet strength requirements in most cases, but also can be quickly broken under high strength, to avoid a safety accident caused by pulling the utility pole.

In an example, when processing and manufacturing the strength rod, a person skilled in the art may maximize the Young's modulus of the strength rod and minimize the bending radius of the strength rod on a basis that the breaking strength of the strength rod meets the range of 800 MPa to 1250 MPa.

For example, a person skilled in the art may first process the strength rod based on a proportional relationship, and then test breaking strength of the strength rod to detect whether the breaking strength of the strength rod ranges from 800 MPa to 1250 MPa. If the breaking strength of the strength rod does not range from 800 MPa to 1250 MPa, a ratio of a cross-sectional area of a central rod to a cross-sectional area of a cladding tube is adjusted, until the breaking strength of the processed strength rod ranges from 800 MPa to 1250 MPa.

In a possible implementation, the optical fiber cable is a circular optical fiber cable or an oval optical fiber cable, the optical fiber is located in a cavity formed by a tube wall of the outer sheath, and the strength rod is embedded in the tube wall of the outer sheath.

In a possible implementation, the optical fiber cable is a figure-8 optical fiber cable, and the outer sheath includes an optical fiber outer sheath and a suspension wire outer sheath.

The optical fiber is located in a first cavity formed by a tube wall of the optical fiber outer sheath, and the strength rod is located in a second cavity formed by a tube wall of the suspension wire outer sheath.

A specific position of the strength rod in the outer sheath is not limited in this embodiment. A person skilled in the art may flexibly select the position of the strength rod in the outer sheath based on an actual situation.

In this embodiment of this application, the Young's modulus of the strength rod of the optical fiber cable is greater than 53 GPa, the bending radius of the strength rod is less than 26 D, D is the diameter of the strength rod, and the restored straightness of the strength rod after the bending is greater than 80%. From the Young's modulus of the strength rod, it can be learned that the strength rod has good tensile elasticity. From the bending radius of the strength rod, it can be learned that the strength rod has good bending performance. From the restored straightness of the strength rod after the bending, it can be learned that the strength rod has good bending resilience. Using the strength rod with the foregoing mechanical characteristic as a strength member of the optical fiber cable enables the optical fiber cable to have good tensile elasticity and good bending resilience. It can be learned that, the optical fiber cable can be applied to not only overhead layout but also duct layout. Therefore, in optical fiber cable layout, especially in a layout manner in which overhead layout and duct layout are alternated, there is no need to switch between optical fiber cables, thereby reducing an optical fiber cable layout time, and improving optical fiber cable layout efficiency.

### BRIEF DESCRIPTION OF DRAWINGS

FIG. 1 is a schematic diagram of a structure of an optical fiber cable according to this application;
FIG. 2 is a schematic diagram of a structure of an optical fiber cable according to this application;
FIG. 3 is a schematic diagram of a structure of an optical fiber cable according to this application;
FIG. 4 is a schematic diagram of a structure of an optical fiber cable according to this application;
FIG. 5 is a schematic diagram of a structure of an optical fiber cable according to this application;
FIG. 6 is a schematic diagram of a structure of an optical fiber cable according to this application; and
FIG. 7 is a schematic diagram of a structure of an optical fiber cable according to this application.

Description of reference numerals:
1. optical fiber; 2. strength rod; 21. central rod; 22. cladding tube; and 23. adhesive member; and
3. outer sheath; 31. cavity; 32. optical fiber outer sheath; 33. suspension wire outer sheath; 321. first cavity; and 331. second cavity.

### DESCRIPTION OF EMBODIMENTS

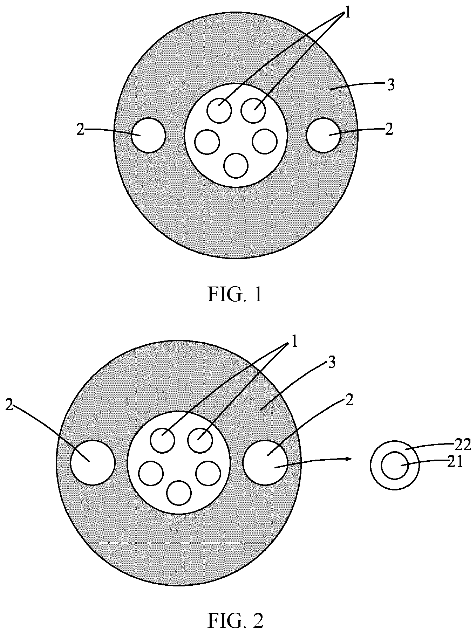

As shown in FIG. 1, an optical fiber cable may include an optical fiber 1, at least one strength rod 2, and an outer sheath 3. Both the optical fiber 1 and the at least one strength rod 2 are located in the outer sheath 3.

The strength rod 2 is mostly made of a steel wire or glass fiber reinforced plastic (GFRP, Glass Fiber-Reinforced Plastic). If the steel wire serves as the strength rod of the optical fiber cable, as a Young's modulus of the steel wire is high, the optical fiber cable is enabled to have good tensile elasticity, and can resist specific tensile stress when applied to overhead layout. However, when the optical fiber cable with the steel wire is applied to duct layout, the optical fiber cable cannot easily pass through a duct and needs help from a duct rodder because the optical fiber cable is prone to bending but cannot be easily straightened after the bending.

If the glass fiber reinforced plastic serves as the strength rod of the optical fiber cable, as the glass fiber reinforced plastic can be bent and can be easily straightened after the bending, the glass fiber reinforced plastic helps the optical fiber cable pass through a duct and no duct rodder is needed when the optical fiber cable is applied to duct layout. However, as the optical fiber cable with the glass fiber reinforced plastic has a low Young's modulus and small tensile elasticity, the optical fiber cable has a weak capability of resisting tensile stress and is prone to tensile breaking when applied to overhead layout.

For the strength rod with the glass fiber reinforced plastic, if the Young's modulus of the strength rod is increased, the tensile elasticity of the strength rod is improved. However, the breaking strength of the strength rod also increases with the Young's modulus. When the strength rod with improved tensile elasticity is applied to overhead layout and encounters high stress, in case of a strong wind force, as the strength rod has high breaking strength and the optical fiber cable is difficult to break, a utility pole on which the strength rod is located may be pulled down, causing a major safety accident.

It can be learned that, as the strength rod of the optical fiber cable, the steel wire has good tensile elasticity but cannot be easily straightened after being bent. This is not conducive to passing through a duct. As the strength rod of the optical fiber cable, the glass fiber reinforced plastic has good bending resilience. To be specific, the glass fiber reinforced plastic is easy to be straightened after being bent, but has low tensile elasticity and therefore is not conducive to overhead layout. The breaking strength of the glass fiber reinforced plastic increases with the tensile elasticity of the glass fiber reinforced plastic. In overhead layout, the optical fiber cable is difficult to break in case of a strong wind force, and therefore is not conducive to safety.

An embodiment of this application provides an optical fiber cable. A strength rod 2 of the optical fiber cable can have good tensile elasticity and good bending resilience. In addition, breaking strength of the strength rod 2 falls within a proper range. Therefore, the strength rod 2 not only can provide specific strength, but also can be quickly broken when environmental stress is high, so as to avoid pulling down a utility pole on which the strength rod 2 is located and reduce a potential safety hazard.

A Young's modulus of the strength rod 2 is greater than 53 GPa, a bending radius of the strength rod 2 is less than 26 D, and restored straightness of the strength rod 2 is greater than 80%. The restored straightness is a degree by which the strength rod 2 is automatically straightened after being bent, and D is a diameter of the strength rod 2.

The Young's modulus of the strength rod 2 is a physical quantity that reflects tensile elasticity of the strength rod 2, for example, a larger Young's modulus of the strength rod 2 indicates higher tensile elasticity performance of the strength rod 2.

The bending radius of the strength rod 2 is a physical quantity that reflects bending performance of the strength rod 2. A smaller bending radius indicates that the strength rod 2 is more easily bent, and a larger bending radius indicates that the strength rod 2 is less easily bent. To help the optical fiber cable pass through a duct, especially a bending duct, the optical fiber cable needs to have a specific bending property. Therefore, the bending radius of the strength rod 2 needs to be less than 26 D.

The restored straightness is a physical quantity that reflects resilience generated after the strength rod 2 is bent. Higher restored straightness indicates higher resilience generated after the strength rod is bent. The restored straightness may be calculated by using a bending angle. For example, a ratio of a bending angle existing after automatic recovery from bending to 180 degrees is denoted as the restored straightness.

That restored straightness of the strength rod 2 is greater than 80% refers to: When the strength rod 2 is bent at a bending radius less than 26 D, the restored straightness of the strength rod is greater than 80%.

In an example, the strength rod 2 serves as a strength member of the optical fiber cable, and the Young's modulus of the strength rod 2 is greater than 53 GPa, so that the optical fiber cable has good tensile elasticity, the optical fiber cable has a good tensile resistance effect when applied to overhead layout, and the optical fiber cable is not prone to tensile breaking in cases of a strong wind force and snow coverage.

In an example, the bending radius of the strength rod 2 is less than 26 D, and D is the diameter of the strength rod 2, so that the strength rod 2 has the bending property. After an external force causing the strength rod 2 to bend is removed, the strength rod 2 can automatically recover, and the restored straightness is greater than 80%. With the strength rod 2 that can be bent and automatically straightened after the bending serving as a strength member of the optical fiber cable, the optical fiber cable can be bent and can be automatically straightened after the bending. In this way, when applied to duct layout, the optical fiber cable has a good capability of passing through a duct, and no duct rodder is needed for passing through a duct.

It can be learned that, using the strength rod 2 with the foregoing mechanical characteristic as a strength member of the optical fiber cable enables the optical fiber cable to have good tensile elasticity and good bending resilience. It can be learned that, the optical fiber cable can be applied to not only overhead layout but also duct layout. Therefore, in optical fiber cable layout, especially in a layout manner in which overhead layout and duct layout are alternated, there is no need to switch between optical fiber cables, thereby reducing an optical fiber cable layout time, and improving optical fiber cable layout efficiency.

In addition, the optical fiber cable has good tensile elasticity and can resist a specific wind force and snow coverage. The optical fiber cable has the bending property and can be suitable for passing through a bending duct. The optical fiber cable can automatically resile after being bent. This helps quickly pass through a duct.

In an example, as a strength member of the optical fiber cable, the strength rod 2 has specific strength. Correspondingly, the breaking strength of the strength rod 2 ranges from 800 MPa to 1250 MPa.

The breaking strength is strength generated when breaking occurs. Higher breaking strength indicates a higher capability of resisting breaking, and lower breaking strength indicates a lower capability of resisting breaking.

The breaking strength of the strength rod 2 ranges from 800 MPa to 1250 MPa, so that the optical fiber cable has high strength and can resist most stress load. With the breaking strength of the strength rod 2 lower than 1250 MPa, the strength rod 2 can be quickly broken under particularly large stress when used in an overhead optical fiber cable, to avoid a case that a utility pole is pulled because the optical fiber cable is not broken and consequently a safety accident is caused by collapse of the utility pole.

It can be learned that, the strength rod 2 with the breaking strength ranging from 800 MPa to 1250 MPa not only can meet strength in most cases, but also can be quickly broken under high strength, to avoid a safety accident caused by pulling the utility pole.

In an example, when processing and manufacturing the strength rod 2, a person skilled in the art may maximize the Young's modulus of the strength rod 2 and minimize the bending radius of the strength rod 2 on a basis that the breaking strength of the strength rod 2 meets the range of 800 MPa to 1250 MPa.

For the strength rod 2 to have good tensile elasticity for application to an overhead scenario, to have good bending resilience for application to a duct, and to further meet proper breaking strength to improve safety in an overhead scenario, correspondingly, the strength rod 2 may be formed by a material with good tensile elasticity and a material with good bending elasticity in a composite manner.

In one composite manner of the strength rod 2, a material with good tensile elasticity and a material with good bending resilience are combined based on a specific proportion to obtain a material with both good tensile elasticity and good bending resilience, and the strength rod is processed by using this material. For example, a non-metallic fiber material with good tensile elasticity may be denoted as a second-type non-metallic fiber material, and another non-metallic fiber material with good bending resilience may be denoted as a first-type non-metallic fiber material. The two materials are blended based on a specific proportion to obtain a material with both good tensile elasticity and good bending resilience, and the strength rod 2 is processed by using this material. The first-type non-metallic fiber material may be glass yarn, and the second-type non-metallic fiber material may be at least one of carbon fiber and aramid yarn.

For another example, a metal material with good tensile elasticity and the first-type non-metallic fiber material with good bending resilience are blended based on a specific proportion to obtain a material with both good tensile elasticity and good bending resilience, and the strength rod is processed by using this material. The metal material may be steel, and the first-type non-metallic fiber material may be glass yarn.

The proportion for blending may be determined based on a range of breaking strength that needs to be met. For example, blending is first performed based on one proportion, and after a strength rod is processed, breaking strength of the strength rod is tested. If the breaking strength is not in the foregoing range, the proportion of the materials is adjusted, until the breaking strength is in the foregoing range.

In another composite manner of the strength rod 2, the strength rod 2 may be formed by a rod-like structure and at least one tubular structure. For example, as shown in FIG. 2, the strength rod 2 may include a central rod 21 and at least one cladding tube 22, and the at least one cladding tube 22 is sequentially wrapped on an outer surface of the central rod 21 from inside out.

To enable the strength rod 2 to meet the mechanical characteristics that the Young's modulus is greater than 53 GPa, the bending radius is less than 26 D, and the restored straightness is greater than 80%, correspondingly, the central rod 21 has a Young's modulus greater than 100 GPa and has good tensile elasticity, and the at least one cladding tube 22 can be bent, has restored straightness greater than 80% after the bending, and has good bending resilience.

For example, a material of the central rod 21 may be a steel wire, carbon fiber, aramid yarn, or the like, and a material of the cladding tube 22 may be one or more of glass yarn, basalt yarn, liquid crystal yarn, and the like.

In an example, the central rod 21 may be a rod-like structure formed by a metal material, and the at least one cladding tube 22 may be a tubular structure formed by the first-type non-metallic fiber material.

The metal material may be a steel wire with a high Young's modulus. For example, the steel wire may be one of a common steel wire, a phosphatized steel wire, a galvanized steel wire, and a stainless steel wire.

For example, the central rod 21 may be a rod-like structure formed by cluster-like steel wires or a rod-like structure formed by steel strands.

The first-type non-metallic fiber material may be a non-metallic fiber material that can be bent and that has good bending resilience, for example, may be at least one of glass yarn, basalt yarn, and liquid crystal yarn.

In another example, both the central rod 21 and the cladding tube 22 may be non-metallic fiber materials. For example, the central rod 21 is a rod-like structure formed by the second-type non-metallic fiber material, and the cladding tube 22 is a tubular structure formed by the first-type non-metallic fiber material. The second-type non-metallic fiber material is a non-metallic fiber material whose Young's modulus is greater than 100 GPa, for example, may be carbon fiber or aramid yarn.

As described above, there may be one or more cladding tubes 22. In a solution in which there is one cladding tube 22, the central rod 21 is located in a cavity formed by a tube wall of the cladding tube 22.

For example, the central rod 21 is a steel wire, and the cladding tube 22 is a tubular structure formed by glass yarn, or the cladding tube 22 is a tubular structure formed by basalt yarn, or the cladding tube 22 is a tubular structure formed by liquid crystal yarn.

In a solution in which there are a plurality of cladding tubes 22, the plurality of cladding tubes 22 are sequentially wrapped on the outer surface of the central rod 21 from inside out, and Young's moduli of the plurality of cladding tubes 22 are sequentially decreased from inside out. For example, there are two cladding tubes 22, denoted as a first cladding tube and a second cladding tube. A Young's modulus of the first cladding tube is greater than a Young's modulus of the second cladding tube. The first cladding tube is wrapped on the outer surface of the central rod 21, and the second cladding tube is wrapped on an outer surface of the first cladding tube. In this way, a cladding tube with higher tensile elasticity is located inside, and a cladding tube with slightly lower tensile elasticity is located outside. This helps improve the tensile elasticity and the bending resilience of the strength rod 2.

For example, there are two cladding tubes 22, including a tubular structure formed by glass yarn and a tubular structure formed by basalt yarn. A person skilled in the art may determine a positional relationship between the two cladding tubes 22 based on a Young's modulus of the glass yarn and a Young's modulus of the basalt yarn. Alternatively, the two cladding tubes 22 include a tubular structure formed by glass yarn and a tubular structure formed by liquid crystal yarn. A person skilled in the art may determine a positional relationship between the two cladding tubes 22 based on a Young's modulus of the glass yarn and a Young's modulus of the liquid crystal yarn. Alternatively, the two cladding tubes 22 include a tubular structure formed by basalt yarn and a tubular structure formed by liquid crystal yarn. A person skilled in the art may determine a positional relationship between the two cladding tubes 22 based on a Young's modulus of the basalt yarn and a Young's modulus of the liquid crystal yarn.

For another example, there are three cladding tubes 22, including a tubular structure formed by glass yarn, a tubular structure formed by basalt yarn, and a tubular structure formed by liquid crystal yarn. A person skilled in the art may determine a positional relationship between the three cladding tubes 22 based on a Young's modulus of the glass yarn, a Young's modulus of the basalt yarn, and a Young's modulus of the liquid crystal yarn.

Alternatively, there may be more cladding tubes 22. A quantity of cladding tubes is not limited in this embodiment. A person skilled in the art may flexibly select the quantity of cladding tubes 22 based on an actual situation.

For a solution in which the strength rod 2 includes the central rod 21 and the at least one cladding tube 22, in processing and manufacturing of the strength rod 2, a proportion of the strength rod 2 to the at least one cladding tube 22 may be adjusted based on breaking strength that needs to be met by the strength rod 2.

For example, the central rod 21 is a rod-like structure formed by a steel wire, the cladding tube 22 is a tubular structure formed by glass yarn, or the cladding tube 22 is a tubular structure formed by basalt yarn, or the cladding tube 22 is a tubular structure formed by liquid crystal yarn, and a ratio of a cross-sectional area of the central rod 21 to a cross-sectional area of the cladding tube 22 ranges from 10% to 30%.

For another example, the central rod 21 is a rod-like structure formed by a steel wire, the cladding tube 22 includes tubular structures formed by two or more materials, and a ratio of a cross-sectional area of the central rod 21 to a total cross-sectional area of the cladding tube 22 ranges from 10% to 30%. For example, S1:(S2+S3) ranges from 10% to 30%, S1 is the cross-sectional area of the steel wire, S2 is a cross-sectional area of a tubular structure formed by glass yarn, and S3 is a cross-sectional area of a tubular structure formed by basalt yarn.

For another example, the central rod 21 is a rod-like structure formed by the second-type non-metallic fiber material, the cladding tube 22 is a tubular structure formed by the first-type non-metallic fiber material, and a ratio of a cross-sectional area of the central rod 21 to a cross-sectional area of the cladding tube 22 ranges from 30% to 60%.

For example, the central rod 21 is a rod-like structure formed by carbon fiber or aramid yarn, the cladding tube 22 is a tubular structure formed by glass yarn, or the cladding tube 22 is a tubular structure formed by basalt yarn, or the cladding tube 22 is a tubular structure formed by liquid crystal yarn, and a ratio of a cross-sectional area of the central rod 21 to a cross-sectional area of the cladding tube 22 ranges from 30% to 60%.

For another example, the central rod 21 is a rod-like structure formed by carbon fiber or aramid yarn, the cladding tube 22 includes tubular structures formed by two or more materials, and a ratio of a cross-sectional area of the central rod 21 to a total cross-sectional area of the cladding tube 22 ranges from 30% to 60%. For example, S1:(S2+S3) ranges from 30% to 60%, S1 is the cross-sectional area of the rod-like structure formed by carbon fiber or aramid yarn, S2 is a cross-sectional area of a tubular structure formed by glass yarn, and S3 is a cross-sectional area of a tubular structure formed by basalt yarn.

For example, a person skilled in the art may first process the strength rod 2 based on a proportional relationship, and then test breaking strength of the strength rod 2 to detect whether the breaking strength of the strength rod 2 ranges from 800 MPa to 1250 MPa. If the breaking strength of the strength rod 2 does not range from 800 MPa to 1250 MPa, the ratio of the cross-sectional area of the central rod 21 to the cross-sectional area of the cladding tube 22 is adjusted, until the breaking strength of the processed strength rod 2 ranges from 800 MPa to 1250 MPa.

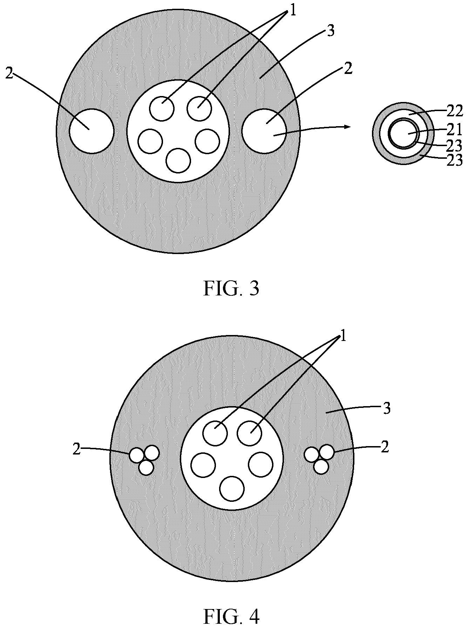

In an example, to improve fastening performance between the central rod 21 and the cladding tube 22, correspondingly, as shown in FIG. 3, the strength rod 2 may further include an adhesive member 23, and the adhesive member 23 may be glue, resin for fastening, or the like. The adhesive member 23 is provided between the central rod 21 and the cladding tube 22 and on an outer surface of the cladding tube 22.

For example, if there is one cladding tube 22, the adhesive member 23 is provided between the central rod 21 and the cladding tube 22 and on an outer surface of the cladding tube 22. The adhesive member 23 can enable better fastening performance between the central rod 21 and the cladding tube 22, so that the central rod 21 and the cladding tube 22 do not easily detach under an external force, thereby improving stability of the strength rod 2 in the optical fiber cable.

For another example, if there are a plurality of cladding tubes 22, the adhesive member 23 is provided between the central rod 21 and a cladding tube 22 at an innermost layer, between two adjacent cladding tubes 22, and on an outer surface of a cladding tube 22 at an outermost layer. The adhesive member 23 can enable better fastening performance between the central rod 21 and the cladding tube 22, so that the central rod 21 and the cladding tube 22 do not easily detach under an external force, thereby improving stability of the strength rod 2 in the optical fiber cable.

In an example, to improve fastening performance between the central rod 21 and the cladding tube 22, and improve mechanical performance generated after the central rod 21 and the cladding tube 22 are combined, a person skilled in the art may add a trace amount of non-metallic fiber material between the central rod 21 and the cladding tube 22 and between adjacent cladding tubes 22.

Based on the foregoing description, a person skilled in the art may select, based on the Young's modulus, the material serving as the central rod 21 when processing the strength rod 2; select, based on the bending radius and the restored straightness, the material serving as the cladding tube 22; and then adjust the ratio of the cross-sectional area of the central rod 21 to the cross-sectional area of the cladding tube 22 based on the range of breaking strength that needs to be met by the strength rod 2. The strength rod 2 processed in this way has breaking strength ranging from 800 MPa to 1250 MPa, a high Young's modulus, a small bending radius, and high restored straightness.

The foregoing describes the strength rod 2 of the optical fiber cable. After the strength rod 2 that meets a mechanical requirement is processed, the strength rod 2 and the optical fiber 1 may be extruded into an outer sheath 3 to form the optical fiber cable.

The outer sheath 3 may use a polymer material with low strength and high hardness. For example, breaking strength of the outer sheath 3 is less than the breaking strength of the strength rod 2, tensile strength of the outer sheath 3 ranges from 10 MPa to 25 MPa, and hardness of the outer sheath 3 is greater than or equal to Shore A90. In this case, during breaking of the optical fiber cable, the outer sheath 3 can be rapidly broken and does not easily form bonding or a brush.

A person skilled in the art may select a quantity of strength rods 2 based on the tensile elasticity, the bending resilience, the breaking strength, and the like that need to be met by the optical fiber cable. For example, the quantity of strength rods 2 may be 1, 2, or above. This is not limited in this embodiment, and a person skilled in the art may flexibly select the quantity of strength rods 2 according to an actual requirement.

For example, if there are a plurality of strength rods 2, the plurality of strength rods 2 may be evenly distributed in the outer sheath 3, as shown in FIG. 2. For another example, if there are a plurality of strength rods 2, the plurality of strength rods 2 are divided into a plurality of bundles, and the strength rods 2 are evenly distributed in the outer sheath 3 by bundle.

As shown in FIG. 3, there are two strength rods 2, and the two strength rods 2 are centrosymmetrically distributed about a center of the optical fiber cable. As shown in FIG. 4, a plurality of strength rods 2 form one bundle, and two bundles of strength rods 2 are obtained. The two bundles of strength rods 2 may be centrosymmetrically distributed about a center of the optical fiber cable.

In this embodiment, position distribution of the plurality of strength rods 2 in the optical fiber cable is not specifically limited. A person skilled in the art may flexibly select positions of the plurality of strength rods 2 based on an actual situation.

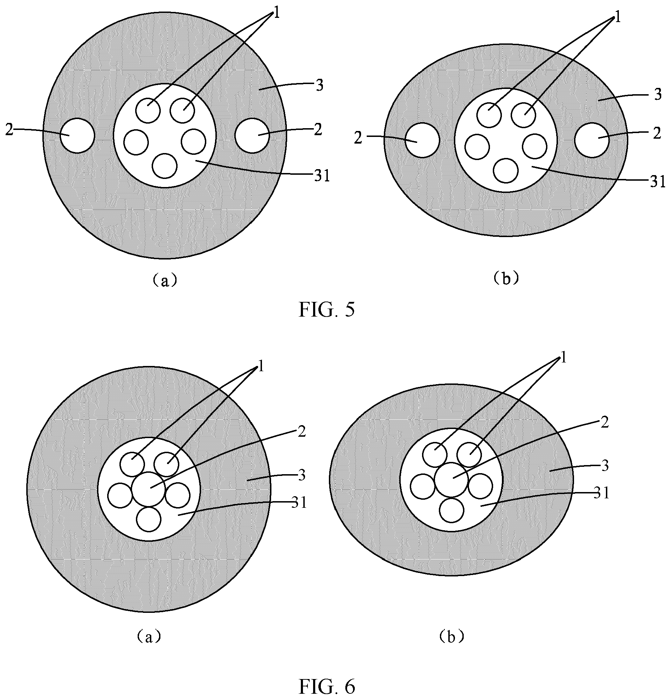

For a position of the strength rod 2 in the outer sheath 3, as shown in (a) of FIG. 5, the optical fiber cable is a circular optical fiber cable; as shown in (b) of FIG. 5, the optical fiber cable is an oval optical fiber cable; and the optical fiber 1 may be located in a cavity 31 formed by a tube wall of the outer sheath 3, and at least one strength rod 2 may be embedded in the tube wall of the outer sheath 3.

Alternatively, as shown in FIG. 6, both the optical fiber 1 and the at least one strength rod 2 are located in a cavity 31 formed by a tube wall of the outer sheath 3. As shown in (a) of FIG. 6, the optical fiber cable is a circular optical fiber cable. As shown in (b) of FIG. 6, the optical fiber cable is an oval optical fiber cable. Both the optical fiber 1 and the at least one strength rod 2 are located in the cavity 31 formed by the tube wall of the outer sheath 3. For example, if there is one strength rod 2, a central axis of the strength rod 2 coincides with a central axis of the cavity 31. For another example, if there are a plurality of strength rods 2, the optical fiber 1 is located at a central position of the cavity 31, and the plurality of strength rods 2 surround the optical fiber 1 in a circumferential direction of the optical fiber 1.

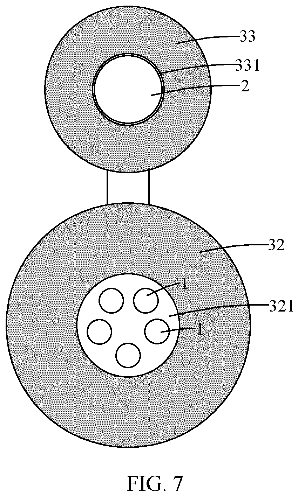

Alternatively, as shown in FIG. 7, the optical fiber cable is a figure-8 optical fiber cable, and the outer sheath 3 includes an optical fiber outer sheath 32 and a suspension wire outer sheath 33. The optical fiber 1 is located in a first cavity 321 formed by a tube wall of the optical fiber outer sheath 32, and the strength rod 2 is located in a second cavity 331 formed by a tube wall of the suspension wire outer sheath 33.

A specific position of the strength rod 2 in the outer sheath 3 is not limited in this embodiment. A person skilled in the art may flexibly select the position of the strength rod 2 in the outer sheath 3 based on an actual situation.

Based on the foregoing description, in manufacturing of the optical fiber cable, the strength rod 2 that includes the central rod 21 and the at least one cladding tube 22 is first processed and manufactured. In a process of processing the strength rod 2, the central rod 21 and the cladding tube 22 are first processed based on a specific proportion, mechanical parameters such as breaking strength, tensile elasticity, and bending resilience of the strength rod 2 are tested after the strength rod 2 is processed, and then the proportion of the central rod 21 to the cladding tube 22 is adjusted on a basis that the breaking strength ranges from 800 MPa to 1250 MPa, so as to improve the tensile elasticity and the bending resilience.

The strength rod 2 processed in this way can meet high tensile elasticity, high bending resilience, and proper breaking strength.

Then, the optical fiber 1, the strength rod 2, and the outer sheath 3 are processed into the optical fiber cable in an extrusion manner.

There is further a tearing rope between the cladding tube 22 and the outer sheath 3, so that when an optical fiber connector is installed onto the optical fiber cable, the outer sheath 3 is peeled off by using the tearing rope, to expose the optical fiber.

In this embodiment of this application, the Young's modulus of the strength rod of the optical fiber cable is greater than 53 GPa, the bending radius of the strength rod is less than 26 D, D is the diameter of the strength rod, and the restored straightness of the strength rod after the bending is greater than 80%. From the Young's modulus of the strength rod, it can be learned that the strength rod has good tensile elasticity. From the bending radius of the strength rod, it can be learned that the strength rod has good bending performance. From the restored straightness of the strength rod after the bending, it can be learned that the strength rod has good bending resilience. Using the strength rod with the foregoing mechanical characteristic as a strength member of the optical fiber cable enables the optical fiber cable to have good tensile elasticity and good bending resilience. It can be learned that, the optical fiber cable can be applied to not only overhead layout but also duct layout. Therefore, in optical fiber cable layout, especially in a layout manner in which overhead layout and duct layout are alternated, there is no need to switch between optical fiber cables, thereby reducing an optical fiber cable layout time, and improving optical fiber cable layout efficiency.

The foregoing description is merely an embodiment of this application, but is not intended to limit this application. Any modification, equivalent replacement, or improvement made without departing from the spirit and principle of this application should fall within the protection scope of this application.

## Claims

1. An optical fiber cable, wherein the optical fiber cable comprises an optical fiber (1), at least one strength rod (2), and an outer sheath (3);
both the optical fiber (1) and the at least one strength rod (2) are located in the outer sheath (3); and
a Young's modulus of the strength rod (2) is greater than 53 GPa, a bending radius of the strength rod (2) is less than 26 D, restored straightness of the strength rod (2) is greater than 80%, the restored straightness is a degree by which the strength rod (2) is straightened after being bent, and D is a diameter of the strength rod (2).

2. The optical fiber cable according to claim 1, wherein the strength rod (2) comprises a central rod (21) and at least one cladding tube (22), and the at least one cladding tube (22) is sequentially wrapped on an outer surface of the central rod (21) from inside out; and
a Young's modulus of the central rod (21) is greater than 100 GPa, each cladding tube (22) can be bent, and restored straightness generated after the bending is greater than 80%.

3. The optical fiber cable according to claim 2, wherein the central rod (21) is a rod-like structure formed by a plurality of steel wires, and each cladding tube (22) is a tubular structure formed by a first-type non-metallic fiber material.

4. The optical fiber cable according to claim 3, wherein a ratio of a cross-sectional area of the central rod (21) to a cross-sectional area of the at least one cladding tube (22) ranges from 10% to 30%.

5. The optical fiber cable according to claim 2, wherein the central rod (21) is a rod-like structure formed by a second-type non-metallic fiber material, and each cladding tube (22) is a tubular structure formed by a first-type non-metallic fiber material.

6. The optical fiber cable according to claim 5, wherein a ratio of a cross-sectional area of the central rod (21) to a cross-sectional area of the at least one cladding tube (22) ranges from 30% to 60%.

7. The optical fiber cable according to claim 5 or 6, wherein the first-type non-metallic fiber material comprises one or more of glass yarn, basalt yarn, and liquid crystal yarn, and the second-type non-metallic fiber material comprises carbon fiber or aramid yarn.

8. The optical fiber cable according to any one of claims 2 to 6, wherein the strength rod (2) further comprises an adhesive member (23), and the adhesive member (23) is provided between the central rod (21) and the central rod (22) and on an outer surface of the cladding tube (22).

9. The optical fiber cable according to any one of claims 1 to 8, wherein a breaking strength of the strength rod (2) ranges from 800 MPa to 1250 MPa.

10. The optical fiber cable according to any one of claims 1 to 9, wherein the optical fiber cable is a circular optical fiber cable or an oval optical fiber cable, the optical fiber (1) is located in a cavity (31) formed by a tube wall of the outer sheath (3), and the strength rod (2) is embedded in the tube wall of the outer sheath (3).

11. The optical fiber cable according to any one of claims 1 to 9, wherein the optical fiber cable is a figure-8 optical fiber cable, and the outer sheath (3) comprises an optical fiber outer sheath (32) and a suspension wire outer sheath (33); and
the optical fiber (1) is located in a first cavity (321) formed by a tube wall of the optical fiber outer sheath (32), and the strength rod (2) is located in a second cavity (331) formed by a tube wall of the suspension wire outer sheath (33).
